# EUROPÄISCHE PATENTSCHRIFT

(11) **EP 0 970 424 B1**
(45) Veröffentlichungstag und Bekanntmachung des Hinweises auf die Patenterteilung: **04.10.2001**
(21) Anmeldenummer: 97948734.5
(22) Anmeldetag: 12.11.1997
(51) Int. Cl.: G06F 11/00

(54) **WATCHDOG-SCHALTUNG**
WATCHDOG CIRCUIT
CIRCUIT DE SURVEILLANCE

(30) Priorität: 25.03.1997 DE 19712375
(43) Veröffentlichungstag der Anmeldung: 12.01.2000
(73) Patentinhaber: ROBERT BOSCH GMBH, 70442 Stuttgart (DE)
(72) Erfinder: NITSCHKE, Werner, D-71254 Ditzingen (DE); DROBNY, Wolfgang, D-74072 Heilbronn (DE); KARL, Otto, D-71229 Leonberg-Höfingen (DE)
(86) Internationale Anmeldenummer: DE9702645
(87) Internationale Veröffentlichungsnummer: WO9843164

(56) Entgegenhaltungen:
- EP-A- 0 403 396
- DE-A- 3 320 587
- DE-A- 3 914 003
- HILL T ET AL: "MIKROCOMPUTER IN KFZ-ANWENDUNGEN" ELEKTRONIK, Bd. 38, Nr. 4, 17.Februar 1989, Seiten 48-51, 54 - 56, XP000212715

## Beschreibung

### Stand der Technik

Die vorliegende Erfindung betrifft eine Watchdog-Schaltung zum Überwachen der Funktion eines Prozessors, wobei der Prozessor an die Watchdog-Schaltung ein zyklisch sich wiederholendes Testsignal abgibt und die Watchdog-Schaltung ein Resetsignal für den Prozessor erzeugt, wenn das Testsignal nicht in einem von der Watchdog-Schaltung vorgegebenen Zeitfenster erscheint. Ein solcher Fenster-Watchdog ist beispielsweise in der DE 33 20 587 A1 oder der EP 0 479 806 B1 beschrieben. Es ist daraus bekannt, z.B. für Mikroprozessoren Watchdog-Schaltungen einzusetzen, die den Prozessor-Programmablauf überwachen. Bei korrektem Programmablauf steuert der Mikroprozessor in bestimmten Zeitabständen die Watchdog-Schaltung mit einem Testsignal an. Erscheint dieses Testsignal in den von der Watchdog-Schaltung vorgegebenen Zeitfenstern, so wird der Programmablauf des Mikroprozessors ungehindert fortgeführt. Tritt jedoch im Mikroprozessor ein Fehler auf, beispielsweise dadurch, daß der Programmablauf unterbrochen wird, so sendet der Mikroprozessor sein Testsignal nicht innerhalb des vorgegebenen Zeitfensters an die Watchdog-Schaltung aus. Das veranlaßt die Watchdog-Schaltung zur Abgabe eines Resetsignals, welches den Mikroprozessor auf den Programmstart zurücksetzt und/oder eine Fehlfunktion des Mikroprozessors signalisiert.

Aus Elektronik, Band 38, Nr. 4, 17. Februar 1988, S. 48-51, 54-56 ist eine Watchdog-Schaltung bekannt, deren Zeitfenster in seiner Breite veränderbar ist, so daß die Überwachungsperioden für den angeschlossenen Prozessor an den jeweiligen Programmteil bzw. die Prozessor-Betriebsart (Transfer Mode, Hold Mode, Read Mode oder Stand By Mode) angepaßt werden kann.

### Vorteile der Erfindung

Gemäß dem Patentanspruch 1 ist das von der Watchdog-Schaltung vorgegebene Zeitfenster, in dem das Testsignal des zu überwachenden Prozessors erscheinen sollte, in seiner Breite steuerbar. Zweckmäßigerweise wird das Zeitfenster gerade in der Startphase des Programmablaufs des Prozessors vergrößert. Erfahrungsgemäß erreicht der Mikroprozessor in der Startphase seines Programmablaufs noch nicht das gewünscht exakte Zeitraster für das Testsignal, so daß die Watchdog-Schaltung bei Vorgabe eines schmalen Zeitfensters häufiger dem Prozessor durch Abgabe eines Resetsignals eine Fehlfunktion im Programmablauf signalisiert. Es würde dann häufiger zu einem Neustart des Programmablaufs kommen, obwohl eigentlich keine Fehlfunktion des Programmablaufs gegeben ist. Durch die Verbreiterung des Zeitfensters in der Watchdog-Schaltung wird dem Programmablauf in der Startphase ein größerer Spielraum zum Anlaufen gegeben. Sobald die Startphase vorüber ist und der Programmablauf seinen eingeschwungenen Zustand erreicht hat, wird das Zeitfenster wieder auf seine ursprüngliche Breite zurückgesteuert. Für die Veränderung der Breite des Zeitfensters braucht nur seine obere Grenze steuerbar zu sein.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild für eine Watchdog-Schaltung und
Figur 2 ein die Funktion der Watchdog-Schaltung beschreibendes Zeitdiagramm.

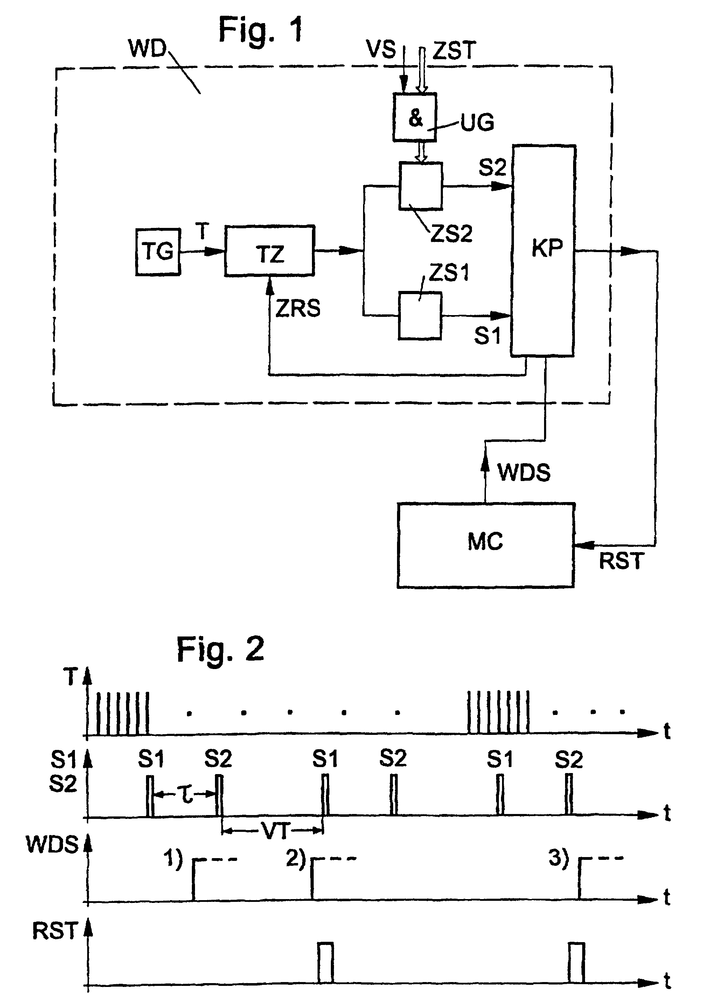

In der Figur 1 ist das Blockschaltbild einer Watchdog-Schaltung WD dargestellt, welche an einen Prozessor MC-beispielsweise Mikroprozessor, Mikrocomputer, Mikrocontroller oder dergleichen - angeschlossen ist. Diese Watchdog-Schaltung WD dient dazu, die Funktion des Prozessors MC zu überwachen.

Die Watchdog-Schaltung WD enthält einen Taktgenerator TG, der ein Taktsignal T mit vorgegebener Taktfrequenz erzeugt und einem Taktzähler TZ zuführt. Das Zeitdiagramm in Figur 2 zeigt das Taktsignal T. Das Ausgangssignal des Taktzählers TZ wird zwei Schaltblöcken ZS1 und ZS2 zugeleitet, von denen der Schaltblock ZS1 eine erste Zählerschwelle und der Schaltblock ZS2 eine zweite Zählerschwelle vorgibt. Entspricht der Zählerstand der in Schaltblock ZS1 abgelegten unteren Zählerschwelle, so wird ein Impuls S1 abgegeben und wenn der Zählerstand der im Schaltblock ZS2 vorgegebenen oberen Zählerschwelle entspricht, wird der Impuls S2 erzeugt. Wie das Zeitdiagramm in Figur 2 verdeutlicht, bilden die beiden Impulse S1 und S2 durch ihren gegenseitigen zeitlichen Abstand τ ein Zeitfenster. In periodischen Abständen VT wird immer wieder ein neues Zeitfenster der Breite τ durch die beiden Impulse S1 und S2 vorgegeben.

Über Beginn und Ende des Zeitfensters in Form der beiden Impulse S1 und S2 wird eine Komparatorschaltung KP informiert. Diese Komparatorschaltung KP erhält auch ein von dem Prozessor MC abgegebenes Testsignal WDS. Die Komparatorschaltung KP vergleicht nun das zeitliche Eintreffen des Testsignals WDS in Relation zu dem Eintreffen der das Zeitfenster begrenzenden Impulse S1 und S2. Tritt das Testsignal WDS des Prozessors MC jeweils nach dem ersten Impuls S1 und vor dem zweiten Impuls S2 des Zeitfensters auf, so wie der Fall 1) im Zeitdiagramm der Figur 2 andeutet, so arbeitet der Prozessor MC fehlerfrei. Erscheint aber das Testsignal WDS im Fall 2) vor der unteren Schwelle S1 des Zeitfensters oder wie im Fall 3) nach der oberen Schwelle S2 des Zeitfensters, so liegt eine Fehlfunktion des Prozessors MC vor. In den zuletzt genannten beiden Fällen 2) und 3) gibt die Komparatorschaltung KP ein Resetsignal RST an den Prozessor MC ab, so daß der Programmablauf des Prozessors neu gestartet werden kann und/oder auf irgendeine Weise die Fehlfunktion signalisiert wird. Die Resetsignale RST für die beiden Fehlerfälle 2) und 3) sind in der Figur 2 dargestellt. Im Fehlerfall 2) wird das Resetsignal RST unmittelbar nach dem zu frühen Testsignal WDS abgegeben. Im Fehlerfall 3) wird das Resetsignal RST von der Komparatorschaltung KP nach dem Impuls S2 für die obere Schwelle des Zeitfensters abgegeben, nämlich dann, wenn sicher ist, daß das Testsignal WDS des Prozessors MC nicht innerhalb des Zeitfensters erschienen ist.

Nach dem korrekterweise im Zeitfenster τ erschienenen Testsignal WDS oder nach dem Resetsignal RST erzeugt die Komparatorschaltung KP ein Rücksetzsignal ZRS für den Taktzähler TZ. Dieser beginnt dann neu zu zählen. Nach einer Verzögerungszeit VT, welche dem Abstand zwischen den Zeitfenstern entspricht, wird die erste Zählerschwelle erreicht, welche den Impuls S1 für den Beginn eines neuen Zeitfensters auslöst.

Die Figur 1 zeigt, daß dem Schaltblock ZS2 für die obere Schwelle des Zeitfensters ein Steuersignal ZST zugeführt wird, mit dem die obere Schwelle, d.h. die Breite τ des Zeitfensters verändert werden kann. Wie einleitend beschrieben, ist es zweckmäßig, bei einem Programmstart des Prozessors MC das Zeitfenster τ zu verbreitern, damit das Programm in der Startphase einen größeren Spielraum zum Anlaufen erhält. Nach der Startphase wird das Zeitfenster auf seine ursprüngliche Breite zurückgestellt. Das Steuersignal ZST für das Zeitfenster wird vorteilhafterweise vom Prozessor MC bereitgestellt. Die Breite des Zeitfensters kann entweder, wie beschrieben, durch Verschieben der oberen Schwelle des Zeitfensters oder durch Verschieben der unteren Schwelle oder durch Verschieben beider Schwellen erfolgen. Nach einem Reset des Prozessors MC wird auch der Taktzähler TZ mit dem Rücksetzsignal ZRS neu gestartet. Das Steuersignal ZST für das Zeitfenster wird dem Schaltblock ZS2 über ein UND-Gatter UG zugeführt. An einem zweiten Eingang des UND-Gatters UG liegt ein Verriegelungssignal VS. Nur wenn das Verriegelungssignal den Zustand "1" hat, kann das Zeitfenster variiert weden. Wenn das Verriegelungssignal den Zustand "0" hat, ist eine Änderung des Zeitfensters nicht möglich. Somit kann dafür gesorgt werden, daß das Zeitfenster nach abgeschlossenem Programmstart nicht mehr verändert werden kann.

Die Erzeugung des Zeitfensters mit der zeitlichen Lage des Testsignals des Prozessors kann abweichend von dem vorangehend beschriebenen Ausführungsbeispiel auf jede andere Art vorgenommen werden. Aus Sicht der Erfindung ist es wesentlich dabei, daß während der Startphase eines Programmablaufs das Zeitfenster vergrößert wird.

## Patentansprüche

1. Watchdog-Schaltung zum Überwachen der Funktion eines Prozessors, wobei der Prozessor (MC) an die Watchdog-Schaltung (WD) ein zyklisch sich wiederholendes Testsignal (WDS) abgibt und die Watchdog-Schaltung (WD) ein Resetsignal (RST) für den Prozessor (MC) erzeugt, wenn das Testsignal (WDS) nicht in einem von der Watchdog-Schaltung (WD) vorgegebenen Zeitfenster (S1, S2) erscheint, dessen Breite (τ) steuerbar ist, **dadurch gekennzeichnet, daß** die Watchdog-Schaltung (WD) das Zeitfenster (S1, S2) vergrößert, wenn im Prozessor (MC) ein Programmablauf gestartet wird, und nach Beendigung der Startphase die Breite (τ) des Fensters (S1, S2) verringert.

2. Watchdog-Schaltung nach Anspruch 1, **dadurch gekennzeichnet, daß** die obere Grenze (S2) für das Zeitfenster (S1, S2) steuerbar ist.

## Claims

1. Watchdog circuit for monitoring the function of a processor, the processor (MC) outputting to the watchdog circuit (WD) a cyclically repeating test signal (WDS) and the watchdog circuit (WD) generating a reset signal (RST) for the processor (MC) if the test signal (WDS) does not appear in a time window (S1, S2) which is predetermined by the watchdog circuit (WD) and whose width (τ) is controllable, **characterized in that** the watchdog circuit (WD) enlarges the time window (S1, S2) if a program sequence is started in the processor (MC), and reduces the width (τ) of the window (S1, S2) after the start phase has ended.

2. Watchdog circuit according to Claim 1, **characterized in that** the upper limit (S2) for the time window (S1, S2) is controllable.

## Revendications

1. Circuit de surveillance pour surveiller le fonctionnement d'un processeur, le processeur (MC) envoyant au circuit de surveillance (WD) un signal de test (WDS) qui se répète de manière cyclique, et le circuit de surveillance (WD) générant un signal de remise à l'état initial (RST) pour le processeur (MC), si le signal de test (WDS) n'arrive pas dans une fenêtre de temps (S1, S2) prédéfinie par le circuit de surveillance (WD), fenêtre dont la largeur (τ) est réglable,
**caractérisé en ce que**
le circuit de surveillance (WD) augmente la fenêtre de temps (S1, S2) lorsque le processeur (MC) lance un déroulement de programme, et diminue la largeur (τ) de la fenêtre (S1, S2) à la fin de la phase de démarrage.

2. Circuit de surveillance selon la revendication 1,
**caractérisé en ce que**
la limite supérieure (S2) de la fenêtre de temps (S1, S2) peut se commander.
